# EUROPÄISCHE PATENTSCHRIFT

(11) **EP 1 889 688 B1**
(45) Veröffentlichungstag und Bekanntmachung des Hinweises auf die Patenterteilung: **26.05.2010**
(21) Anmeldenummer: 07012232.0
(22) Anmeldetag: 22.06.2007
(51) Int. Cl.: B25B 31/00, F16B 19/10

(54) **Befestigungsanordnung und Verwendung einer Einweghülse hierfür**
Wedgelock and use of a disposable bushing therefor
Agrafe d'épinglage et utilisation d'une douille jetable pour celle-ci

(30) Priorität: 18.08.2006 DE 202006012668 U
(43) Veröffentlichungstag der Anmeldung: 20.02.2008
(73) Patentinhaber: Fairchild Fasteners Europe - Camloc GmbH, 65761 Kelkheim (Taunus) (DE)
(72) Erfinder: Scheinberger, Marcus, 65719 Hofheim-Langenhain (DE); Rousselle, Reynald, 92160 Antony (FR)
(74) Vertreter: KEIL & SCHAAFHAUSEN Patentanwälte

(56) Entgegenhaltungen:
- EP-A- 0 161 916
- EP-A- 0 334 706
- EP-A- 0 655 560
- WO-A-2006/108245
- DE-A1- 1 627 429
- GB-A- 525 695
- GB-A- 1 082 813
- US-A- 2 971 425
- US-A- 3 465 637
- US-A- 5 634 751

## Beschreibung

Die Erfindung betrifft eine Befestigungsanordnung, insbesondere zum Festklemmen zu verbindender Körper gegeneinander, mit einem eine erste Anlagefläche bildenden ersten Element und einem eine zweite Anlagefläche bildenden zweiten Element, welche zum Erzeugen einer Klemmkraft in einer axialen Richtung relativ zueinander bewegbar sind, und mit einer Einrichtung zum Ausführen einer Relativbewegung der beiden Anlageflächen zueinander, wobei wenigstens das zweite Element in seiner Erstreckung in einer zu der axialen Richtung zumindest im Wesentlichen senkrechten Richtung aus einem komprimierten Zustand in einen expandierten Zustand zur Ausbildung der zweiten Anlagefläche überführbar ist. Weiter betrifft die Erfindung eine Einweghülse zur Verwendung in einer solchen Befestigungsanordnung.

Im Leichtbau werden beispielsweise zur Verwendung in Flugzeugen häufig Sandwichaufbauten verwendet, die aus mehreren miteinander verbundenen Schichten gebildet sind. Diese Schichten können aus Leichtmetall, Faserverbundwerkstoffen oder dergleichen bestehen. So müssen bei der Montage von Flugzeugkomponenten Strukturteile und Platten untereinander und miteinander verbunden werden. Zwischen diesen Bauteilen aus Aluminium oder Kohlefaserverbundmaterial wird in der Regel ein flüssiges Dichtmaterial aufgebracht, das die Schichten miteinander verklebt. Zum Verbinden dieser Komponenten des Sandwichaufbaus werden diese zunächst vorpositioniert. Temporäre Befestigungsanordnungen, die in Löcher des Sandwichaufbaus eingebracht werden, haben hierbei die Aufgabe die Bauteile zueinander lagegenau zu positionieren, etwaige Verformungen auszugleichen sowie durch eine definierte Vorspannung die Bauteile aneinanderzupressen und überflüssiges Dichtmaterial zu verdrängen, wobei ggf. durch dieses Zusammenpressen überschüssiges Dichtmaterial austreten kann.

Bisher wurden für das Festklemmen der Schichten während des Aushärtens des Dichtmaterials häufig Schraubheftnadeln verwendet. Eine Schraubheftnadel ist dabei meist mit beispielsweise zwei im unbelasteten Zustand eng aneinander anliegenden Federarmen ausgebildet, die eine spreizbare Gabel bilden und an deren Ende ein hakenartiger Vorsprung oder eine Randumkantung vorgesehen ist.

In einem dicht aneinander anliegenden Zustand können die Federarme durch eine Durchgangsbohrung in dem Sandwichaufbau durchgeführt werden, bis die hakenartigen Vorsprünge auf der Unterseite des Schichtaufbaus heraustreten. Dann wird ein zentraler Dorn zwischen den Federarmen durchgeführt, so dass diese sich auseinanderspreizen und die hakenartigen Vorsprünge die unterste Lage des Schichtaufbaus hintergreifen. Die Federarme können dann gegen eine geeignete Anlagefläche eines Gegenelements der Schraubheftnadel angezogen werden, um eine axiale Klemmkraft auf den Sandwichaufbau auszuüben. Nach dem Aushärten des Dichtmaterials wird der Dorn zurückgezogen, so dass die Federarme sich wieder radial nach innen bewegen können, so dass die hakenartigen Vorsprünge wieder die Bohrung passieren können, wenn die Schraubheftnadel aus dem Sandwichaufbau herausgezogen wird. Meist wird in die Bohrung dann ein Blindniet eingesetzt, um den Sandwichaufbau auch im Betrieb zusammengepresst zu halten.

Bei derartigen Schraubheftnadeln wird es als nachteilig empfunden, dass das Dichtmaterial durch die von der Schraubheftnadel aufgebrachte Klemmkraft auch in die Bohrung fließen kann, wobei die Federarme und der Dorn der Schraubheftnadel mit dem Dichtmaterial in Kontakt kommen. Die Schraubheftnadel ist daher nach jedem Gebrauch gründlich zu reinigen, was teilweise mit hohem logistischen Aufwand verbunden ist. Weiter besteht die Gefahr, dass das aushärtende Dichtmaterial ein Zurückfedern der Federarme nach dem Zurückziehen des Domes verhindert, so dass die Schraubheftnadel nicht aus der Bohrung entfernt werden kann.

Weiter sind aus der DE 1 627 429 A1 und der GB 1,082,813 A Gewindeniete bekannt, bei denen mittels einer Schraube ein Hülsenelement derart verformt und aufgeweitet wird, dass das durch eine Bohrung geführte Hülsenelement ein plattenartige Bauteil hintergreifen kann.

Aus der US 2 353 248 ist eine Befestigungsanordnung mit den Merkmalen des Oberbegriffs des Anspruchs 1 bekannt. Die Hüllse soll mehrfach verwendbar sein und besteht z.B. aus Gummi oder Leder.

Aufgabe der vorliegenden Erfindung ist es demgegenüber, eine verbesserte Befestigungsanordnung der eingangs genannten Art bereitzustellen, welche sich nach dem Aushärten eines Dichtmaterials rasch und sicher aus dem Sandwichaufbau lösen lässt und danach möglichst umgehend, d.h. ohne einen Reinigungsvorgang, wieder einsatzfähig ist.

Diese Aufgabe wird erfindungsgemäß mit einer Befestigungsanordnung nach Anspruch 1 gelöst. Hierbei ist das zweite Element als eine plastisch verformbare Hülse ausgebildet, die lösbar an dem als Vorspannelement ausgebildeten ersten Element befestigbar ist, und die durch die Einrichtung zum Ausführen einer Relativbewegung derart gegen das Vorspannelement anziehbar ist, dass die Hülse eine beispielsweise ringförmige und sich radial nach außen erstreckende Ausbeulung bildet, welche die zweite Anlagefläche definiert. Die Hülse lässt sich auf diese Weise in ihrem undeformierten Zustand, in welchem die Hülse beispielsweise eine zylindrische Außenkontur hat, leicht in eine Bohrung eines Sandwichaufbaus einführen. Durch das Verspannen der Hülse gegen das Vorspannelement der Befestigungsanordnung deformiert sich die Hülse unter Ausbildung einer ringförmigen Ausstülpung bzw. Ausbeulung, so dass hierdurch eine Anlagefläche ausgebildet wird. Diese Anlagefläche bildet sich unmittelbar unterhalb der untersten Schicht des Sandwichaufbaus aus, da ein Ausbeulen innerhalb der Bohrung nicht möglich ist. Nach dem Aushärten des Dichtmaterials kann die Hülse von der übrigen Befestigungsanordnung getrennt werden und entweder in dem Sandwichaufbau verbleiben oder aus diesem ausgedrückt werden.

Da die Bohrungen des Sandwichaufbaus von dem Einsetzen eines Blindniets ohnehin meist nachgebohrt werden, ist es möglich, die Hülse in der Bohrung zu belassen und diese vor dem Einsetzen eines Blindniets auszubohren. Erfindungsgemäß wird die Hülse als ein Einwegteil nur für einen Klemmvorgang verwendet. Daher ist es unschädlich, dass die Hülse während des Festklemmens ggf. mit dem Dichtmaterial in Kontakt kommt. Ein Reinigen der Hülse ist nicht notwendig, da diese nach einmaligem Gebrauch verworfen wird. Die erfindungsgemäße Befestigungsanordnung kann daher nach dem Abtrennen von der deformierten Hülse unmittelbar wieder in Betrieb genommen werden, indem eine neue Hülse an der Befestigungsanordnung vorgesehen wird. Dies bringt eine erhebliche Zeiteinsparung gegenüber der bisher notwendigen Reinigung einer Schraubheftnadel mit sich.

Um einerseits eines ausreichend hohe Klemmkraft aufbringen zu können und eine stabile Anlagefläche auszubilden und andererseits rasch aus einem undeformierten Zustand mit beispielsweise zylindrischer Außenfläche in dem die Anlagefläche gebildeten ausgebeulten Zustand überführt zu werden, besteht die Hülse aus einem plastisch verformbaren Metall, insbesondere aus Aluminium. Es können jedoch auch andere geeignete Materialien zur Herstellung der Hülse eingesetzt werden.

Nach einer bevorzugten Ausführungsform der Erfindung ist das Vorspannelement der Befestigungsanordnung durch ein Gehäuse gebildet, in welchem die mit der Hülse verbindbare Einrichtung zum Ausführen einer Relativbewegung in axialer Richtung bewegbar geführt ist.

Erfindungsgemäß ist es vorgesehen, dass die Einrichtung zum Ausführen einer Relativbewegung durch eine Zugspindel gebildet ist, die einen ersten Außengewindeabschnitt, der mit einem entsprechenden Innengewindeabschnitt der Einrichtung in Eingriff steht, und einen zwei-ten Außengewindeabschnitt aufweist, der in einen Innengewindeabschnitt der Hülse einschraubbar ist. Die Zugspindel ermöglicht es, die Hülse soweit gegen das Vorspannelement zu ziehen, bis sich die Hülse bei einer definierten Kraft unter Ausbildung der zweiten Anlagefläche plastisch verformt. Durch weiteres Anziehen der Zugspindel mit einem definierten Drehmoment kann eine geforderte Klemmkraft zum Festklemmen der zu verklebenden Körper aufgebracht werden. Das Aufschrauben der Hülse auf die Zugspindel ist rasch möglich, so dass das Verbinden und Ablösen der Hülse von dem Vorspannelement der Befestigungsanordnung leicht und schnell erfolgen kann.

Wenn der Innendurchmesser der Hülse abschnittsweise zumindest im Wesentlichen dem Außendurchmesser der Zugspindel entspricht, ist die Verformungsrichtung der Hülse im Wesentlichen derart vorgegeben, dass sich eine ringförmige Ausstülpung oder Ausbeulung an der Hülse ausbildet, welche die zweite Anlagefläche definiert. Ein Einbeulen der Hülse wird durch die im Inneren der Hülse verlaufende Zugspindel vermieden.

Nach einer bevorzugten Ausführungsform der Erfindung weist das Vorspannelement ein Gehäuse auf, aus welchem ein Mutternkörper, der in dem Gehäuse drehbar gelagert ist, zumindest bereichsweise zum Angriff eines Werkzeugs herausragt, wobei eine Zugspindel als Einrichtung zum Ausführen einer Relativbewegung mit dem Mutternkörper in Eingriff steht, und wobei in dem Gehäuse eine nicht mit der Zugspindel in Eingriff stehende Druckhülse vorgesehen ist, die eine beispielsweise ringförmige Abstützfläche bildet, gegen welche die Hülse im Betrieb anliegt. Bei diesem Aufbau kann eine Stirnfläche des Gehäuses die erste Anlagefläche bilden, während sich die Hülse, welche nach der Verformung die zweite Anlagefläche bildet, gegen die Druckhülse abstützt. Die Druckhülse und das Gehäuse können dabei so gestaltet werden, dass Dichtungsmaterial, welches während des Festklemmens aus dem Sandwichaufbau austritt, nicht in das Gehäuse des Vorspannelements eindringen kann. Die beweglichen Komponenten der Befestigungsanordnung müssen daher nicht nach jeder Benutzung gereinigt werden.

Während des Aushärtens des Dichtmaterials kann es insbesondere aufgrund des Austritts von Dichtmaterial zu einem Setzen oder einer anderen Dickenabnahme des Sandwichaufbaus kommen. Um trotzdem die erforderliche Klemmkraft während des Aushärtens aufbringen zu können, ist vorzugsweise in dem Vorspannelement ein elastisches Element, beispielsweise ein Tellerfederpaket, derart angeordnet, dass dieses in seinem komprimierten Zustand eine die beiden Anlagenflächen aufeinander zu beaufschlagende Klemmkraft ausübt. Dabei wird es bevorzugt, wenn das Tellerfederpaket zwischen dem Gehäuse des Vorspannelements und der Druckhülse angeordnet ist. Das Tellerfederpaket kann folglich eine hohe Klemmkraft aufbringen, selbst wenn der festzuklemmende Sandwichaufbau sich aufgrund austretenden Dichtmaterials setzt.

Um das Ablösen der Hülse von der übrigen Befestigungsanordnung zu erleichtern, kann in dem Vorspannelement eine Ratsche mit einem dieser zugeordneten Sperrelement vorgesehen sein.

Es wird bevorzugt, wenn in dem die erste Anlagefläche bildenden Bereich des Vorspannelements, d.h. beispielsweise die Stirnfläche des Gehäuses, wenigstens eine insbesondere radial verlaufende Nut vorgesehen ist. Durch diese Nut kann während des Festklemmens austretende Dichtmasse definiert nach außen geleitet werden, wodurch die Gefahr, dass Dichtmaterial in die Befestigungsanordnung eindringt, weiter minimiert wird.

Um vor dem Festklemmen des Sandwichaufbaus oder dergleichen Bauteil zunächst eine definierte Ausbildung der zweiten Anlagefläche durch eine beispielsweise wulstartige Verformung der Hülse zu erreichen, wird es bevorzugt, wenn das Vorspannelement ein mit einer Zugspindel zusammenwirkendes Druckstück zur Anlage der Hülse derart aufweist, dass das Druckstück während einer ersten Phase einer Verschiebungsbewegung der Zugspindel zur Verformung der Hülse zumindest im Wesentlichen ortsfest in dem Vorspannelement gehalten ist und sich während einer zweiten Phase der Verschiebungsbewegung der Zugspindel zum Festklemmen der zu verbindenden Bauteile gemeinsam mit der Zugspindel relativ zu dem Gehäuse des Vorspannelements bewegt. Mit anderen Worten wird in der ersten Phase der Bewegung der Zugspindel nur die Hülse gegen das Druckstück gezogen, ohne dass eine Klemmkraft auf das beispielsweise sandwichartige Bauteil ausgeübt wird, so dass sich zunächst die Ausstülpung an der Hülse ausbilden kann. Erst in der darauffolgenden zweiten Phase der Bewegung der Zugspindel wird diese gemeinsam mit dem Druckstück in das Vorspannelement zurückgezogen, so dass dann eine Klemmkraft ausgeübt wird.

In Weiterbildung dieses Erfindungsgedankens ist es vorgesehen, dass das Druckstück in einem Führungsabschnitt des Gehäuses verschiebbar gelagert ist, der eine radiale, nutartige Ausnehmung aufweist, dass weiter die Zugspindel wenigstens zwei Abschnitte unterschiedlichen Durchmessers aufweist, von denen der der Hülse zugewandte, vordere Abschnitt einen kleineren Durchmesser als der der Hülse abgewandten, hintere Abschnitt aufweist, und dass wenigstens eine Kugel derart angrenzend an das Druckstück und zwischen dem Führungsabschnitt und der Zugspindel aufgenommen ist, dass eine axiale Bewegung des Druckstücks gesperrt wird, solange die wenigstens eine Kugel zwischen der Ausnehmung und dem hinteren Abschnitt der Zugspindel aufgenommen ist, und eine axiale Bewegung des Druckstücks ermöglicht wird, solange die wenigstens eine Kugel außerhalb der Ausnehmung zwischen dem rungsabschnitt und dem vorderen Abschnitt der Zugspindel aufgenommen ist. Das Druckstück lässt sich somit, ähnlich einem Kugelsperrbolzen durch die kugeln arretieren, um zunächst die Verformung an der Hülse auszubilden und dann aus der Arretierung lösen, um gemeinsam mit der Zugspindel in das Gehäuse des Vorspannelements gezogen zu werden.

Die der Erfindung zugrunde liegende Aufgabe wird weiter durch die Verwendung einer Einweghülse in einer Befestigungsanordnung der oben beschriebenen Art gelöst, wobei die Einweghülse aus einem bei einer definierten axialen Belastung durch Ausbeulung plastisch verformbaren Material, vorzugsweise Aluminium, besteht und eine Innenfläche aufweist, die bereichsweise mit einem Innengewinde versehen ist, und eine auf der dem Innengewinde abgewandten Seite ausgebildete Stirnfläche aufweist, die als Anschlagfläche gegen ein Element der Befestigungsanordnung dient. Erfindungsgemäß ist dabei ein definiert geschwächter Bereich zur Einleitung der Ausbeulung derart vorgesehen, dass die Einweghülse auch nach Ausbildung der Ausbeulung einstückig ausgebildet ist. Die erfindungsgemäße Einweghülse kann nach dem Aushärten des Dichtmaterials beispielsweise durch Ausbohren oder Auspressen von dem Sandwichaufbau getrennt werden. Durch die Verwendung einer kostengünstig herstellbaren und rasch mit der übrigen Befestigungsanordnung verbindbaren und trennbaren Einweghülse ermöglicht es, dass Festklemmen von Schichten eines Sandwichaufbaus erheblich zu vereinfachen und zu beschleunigen, da kein aufwändiger Reinigungsvorgang der Befestigungsanordnung notwendig ist. Dies bedeutet insbesondere bei der Herstellung von Flugzeugkomponenten, bei denen eine sehr große Anzahl von temporären Befestigungsanordnungen eingesetzt wird, eine erhebliche Zeiteinsparung und eine deutliche Verbesserung des Logistikaufwands. Weiter ist es auch möglich, Einweghülsen unterschiedlicher Länge oder Stärke vorzuhalten, um diese in Abhängigkeit der Einsatzbedingungen mit demselben Vorspannelement der Befestigungsanordnung zu verwenden.

Nach einer bevorzugten Ausführungsform der Erfindung ist die Außenfläche der Einweghülse wenigstens abschnittsweise mit in axialer Richtung verlaufenden Rillen oder Vorsprüngen versehen. Hierdurch ist es möglich, ein Verdrehen der Hülse in einer Bohrung zu erschweren, so dass sich die (Einweg-)Hülse leichter von der Zugspindel oder dergleichen der Befestigungsanordnung lösen lässt.

Um bei einer definierten axialen Kraft eine die zweite Anlagefläche bildende Ausbeulung zu erreichen, ist vorzugsweise ein Bereich zur Einleitung der Ausbeulung an der Einweghülse vorgesehen. Zweckmäßigerweise liegt dieser Bereich angrenzend an den Innengewindeabschnitt der Einweghülse. Der Bereich zur Einleitung der Ausbeulung kann z. B. durch eine definierte Schwächung oder durch eine leichte Vorbeulung der Einweghülse erzielt werden.

Der geschwächte Bereich kann dabei beispielsweise durch eine Verjüngung der Wandstärke der Hülse gebildet sein. Hierbei hat es sich als besonders vorteilhaft erwiesen, wenn auf der Innenseite der Hülse eine beispielsweise bauchige, nutartige Ausnehmung vorgesehen ist, die die Verjüngung der Wandstärke der Hülse bewirkt. Dieser Bereich kann sich definiert leichter verformen als die übrige Hülse. Alternativ oder zusätzlich hierzu ist es auch möglich, die Verformbarkeit eines Bereichs der Hülse durch eine Wärmebehandlung zu verbessern. Dies kann insbesondere durch eine induktive Erwärmung erfolgen.

Um das Eindringen von Verunreinigungen in das Gewindestück zu verhindern, ist das Gewindestück nach einer bevorzugten Ausführungsform auf der dem Rohrstück abgewandten Seite mit einer Kappe verschlossen.

Die Erfindung betrifft weiter ein Verfahren zum Fixieren und/oder Festklemmen wenigstens eines insbesondere mehrschichtigen Bauteils mittels einer Befestigungsanordung nach einem der Ansprüche 1 bis 10 mit folgenden Schritten: Zunächst wird eine plastisch verformbare Einweghülse und eine mit dieser lösbar verbundene Zugspindel eines Vorspannelements durch eine Öffnung des wenigstens einen Bauteils eingeführt, bis zumindest ein Bereich der Hülse auf der dem Vorspannelement abgewandten Seite aus dem wenigstens einen Bauteil heraustritt. Anschließend wird eine axiale Bewegung der Zugspindel relativ zum Vorspannelement in einer die Hülse zu dem Vorspannelement ziehenden Richtung unter Ausbildung einer beispielsweise wulstartigen Verformung eines Abschnitts der Hülse ausgeführt, wobei die wulstartige Verformung das wenigstens eine Bauteil auf seiner dem Vorspannelement abgewandten Seite hintergreift. Hierbei wird zunächst die wulstartige Verformung an der Hülse ausgebildet, ohne das festzuklemmende Bauteil nennenswert einzuspannen. Weiter kann zum Festklemmen des Bauteils die axiale Bewegung der Zugspindel relativ zu dem Vorspannelement nach der Ausbildung der Verformung der Hülse fortgesetzt werden, so dass das wenigstens eine Bauteil zwischen einer Anlagefläche des Vorspannelements und der eine zweite Anlagefläche bildenden Verformung eingespannt wird.

Weiterbildungen, Vorteile und Anwendungsmöglichkeiten der Erfindung ergeben sich auch aus der nachfolgenden Beschreibung von Ausführungsbeispielen und der Zeichnung. Es zeigen schematisch:
- Fig. 1: in Perspektivansicht eine erfindungsgemäße Befestigungsanordnung mit einem Vorspannelement und einer Einweghülse,
- Fig. 2: in Seitenansicht das Vorspannelement der Befestigungsanordnung nach Fig. 1,
- Fig. 3: eine Schnittansicht des Vorspannelements nach Fig. 2,
- Fig.4: in Seitenansicht eine erfindungsgemäße Befestigungsanordnung nach Fig. 1 beim Festklemmen eines Sandwichaufbaus,
- Fig. 5: eine Schnittansicht durch die Befestigungsanordnung nach Fig. 4,
- Fig. 6: in Schnittansicht eines Vorspannelements nach einer zweiten Ausführungsform der Erfindung,
- Fig. 7a, 7b: in vergrößerter Darstellung ein Detail aus Fig. 6 in einer ersten bzw. einer zweiten Phase der Bewegung der Zugspindel,
- Fig. 8: in Schnittansicht eine Einweghülse nach einer zweiten Ausführungsform der Erfindung,
- Fig. 9a: in Schnittansicht eine Einweghülse nach einer dritten Ausführungsform der Erfindung vor der Verbindung der Hülsenabschnitte,
- Fig. 9b: in vergrößerter Darstellung ein Detail in Fig. 9a,
- Fig. 10a: in Schnittansicht die Einweghülse nach Fig. 9a nach der Verbindung der Hülsenabschnitte und
- Fig. 10b: in vergrößerter Darstellung ein Detail in Fig. 10a.

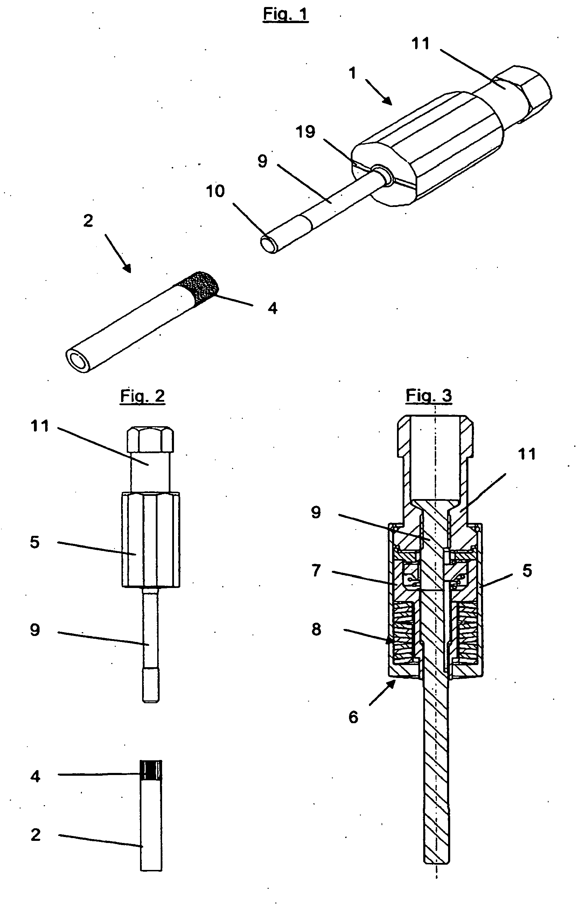

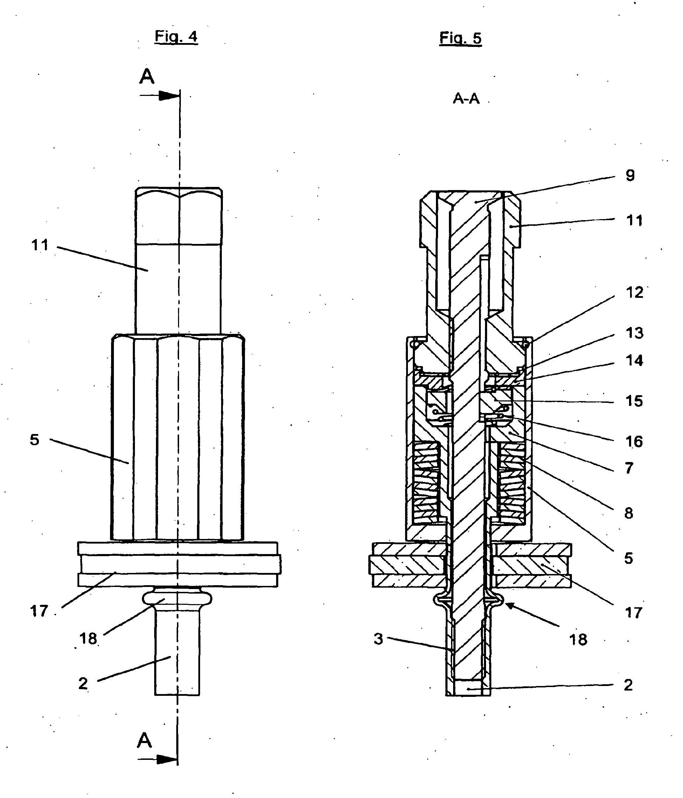

Die in den Figuren 1 bis 5 dargestellte Befestigungsanordnung besteht aus einem Vorspannelement 1 und einer Hülse 2, welche lösbar an dem Vorspannelement 1 befestigbar ist. Hierzu ist die Hülse 2 mit einem Innengewindeabschnitt versehen, welcher in Fig. 5 dargestellt ist. Dieser Innengewindeabschnitt 3 erstreckt sich dabei in dem in den Fig. 2 und 5 unteren Bereich der Hülse 2, während der übrige Bereich der Innenfläche der Hülse 2 nicht mit einem Gewinde versehen ist. Wie aus den Fig. 1 und 2 ersichtlich ist, ist die Außenfläche der Hülse 2 im Wesentlichen glatt und zylindrisch ausgebildet. Ein in Fig. 2 oberer Bereich der Hülse 2 kann jedoch mit einer Profilierung versehen sein, welche in der dargestellten Ausführungsform durch in axialer Richtung der Hülse 2 verlaufende Rillen 4 gebildet ist.

Der Aufbau des Vorspannelements 1 ist am besten aus der Schnittansicht der Fig. 3 und 5 ersichtlich. Das Vorspannelement 1 weist dabei ein becherförmiges Gehäuse 5 auf, dessen in Fig. 3 untere Stirnseite eine erste Anlagefläche 6 bildet. Durch eine Öffnung in der Anlagefläche 6 ist ein rohrartiger Vorsprung einer in dem Gehäuse 5 aufgenommenen Druckhülse 7 geführt. Die Druckhülse 7 erstreckt sich in ihrem in den Fig. 3 und 5 unteren Bereich nicht über die volle Breite des Gehäuses 5, so dass in dem zwischen der Innenwand des Gehäuses 5 und der Außenfläche der Druckhülse 7 gebildeten ringförmigen Hohlraum ein Tellerfederpaket 8 aufgenommen werden kann. Das Tellerfederpaket 8, welches sich auf der unteren Stirnfläche des Gehäuses 5 und einer Schulter der Druckhülse 7 abstützt, drängt die Druckhülse 7 in den Figuren nach oben.

Durch die Druckhülse 7 ist eine Zugspindel 9 drehbar und axial verschiebbar geführt, die an ihrem aus dem Gehäuse 5 herausragenden, vorderen Ende einen Außengewindeabschnitt 10 aufweist. Das vordere Ende der Zugspindel 9 ist dabei derart ausgebildet, dass die Hülse 2 leicht auf die Zugspindel 9 aufgesteckt und der Außengewindeabschnitt 10 in den Innengewindeabschnitt 3 der Hülse 2 eingeschraubt werden kann. Zwischen der Innenwand der Hülse 2 und der Außenwand der Zugspindel 9 verbleibt dabei allenfalls ein minimales Spiel.

Über einen in den Fig. 3 und 5 oberen Außengewindeabschnitt steht die Zugspindel 9 mit einem Mutternkörper 11 mit Innengewindeabschnitt in Eingriff. Der Mutternkörper 11 ist dabei relativ zu dem Gehäuse 5 drehbar in diesem aufgenommen. Zum Angriff eines Werkzeugs ist der Mutternkörper 11 außen abschnittsweise mit einer Profilierung versehen. Durch ein Drehen des Mutternkörpers 11 relativ zu dem Gehäuse 5 wird die Zugspindel 9 in axialer Richtung innerhalb des Gehäuses 5 zwischen einer in Fig. 3 gezeigten ausgefahrenen Stellung der Zugspindel 9 und einer in Fig. 5 gezeigten zurückgezogenen Stellung der Zugspindel 9 bewegt. Ein Sprengring 12 verhindert dabei die unbeabsichtigte Demontage des Mutternkörpers 11 aus dem Gehäuse 5.

Zwischen dem Mutternkörper 11 und der Druckhülse 7 ist in dem Gehäuse 5 eine Ratschenanordnung vorgesehen. Diese ist durch eine Anlaufscheibe 13, ein Sperrelement 14 und eine Ratsche 15 mit zugeordneter Kegelstumpffeder 16 gebildet. Die Anlaufscheibe 13 verringert dabei den Reibwiderstand zwischen dem drehbaren Mutternkörper 11 und dem feststehenden Sperrelement 14. Die im komprimierten Zustand besonders platzsparende Kegelstumpffeder 16, welche sich in einer Ausnehmung der Druckhülse 7 abstützt, drückt die Ratsche 15 gegen das Sperrelement 14, wodurch eine Rotation der Ratsche und damit der mit der Ratsche verbundenen Zugspindel 9 im Uhrzeigersinn verhindert wird. In der entgegengesetzten Drehrichtung gegen den Uhrzeigersinn verhindert die durch die Kegelstumpffeder 16 gegen das Sperrelement 14 gedrückte Ratsche 15 ebenfalls eine Rotation der Zugspindel 9. Bei Erreichen eines definierten Drehmoments, beispielsweise wenn die Zugspindel 9, wie in Fig. 3 gezeigt, an einem Anschlag des Mutternkörpers 11 anliegt, kann die Ratsche 15 gegen die Kraft der Kegelstumpffeder 16 nach unten gedrängt werden und eine Relativbewegung zu dem Sperrelement 14 ausführen, so dass die Zugspindel 9 bei einer Drehung des Mutternkörpers 11 mit gedreht wird. Dies ist erforderlich, um die Zugspindel 9 aus der Hülse 2 herausschrauben zu können.

Im Folgenden wird nun der Betrieb der Befestigungsanordnung näher erläutert: Bei der Montage von Flugzeugkomponenten werden Strukturteile und Platten untereinander und miteinander verbunden. Diese Bauelemente können z.B. aus Aluminium oder Kohlefaserverbundmaterialien bestehen. Ein derartiger Sandwichaufbau 17 ist in den Fig. 4 und 5 dargestellt. Zum Verbinden der einzelnen Schichten des Sandwichaufbaus 17 wird zwischen den Schichten ein in der Regel flüssiges Dichtmaterial aufgebracht und die einzelnen Schichten werden relativ zueinander vorpositioniert.

Durch vorgebohrte Löcher in dem Sandwichaufbau 17 wird eine Befestigungsanordnung mit einem Vorspannelement 1 und einer darauf aufgeschraubten Hülse 2 durchgesteckt. Die Zugspindel 9 des Vorspannelements 1 befindet sich dabei in der in Fig. 3 gezeigten ausgefahrenen Position, in welcher die Zugspindel weit aus dem Gehäuse 5 herausragt. Die Hülse 2 stößt dabei mit einer in den Figuren oberen Stirnfläche gegen die in den Figuren untere Stirnfläche der Druckhülse 7 an und wird abdichtend gegen diese gepresst. Die Länge der Hülse 2 ist dabei derart bemessen, dass der Innengewindeabschnitt 3 sowie ein nicht mit einem Innengewinde versehener Abschnitt der Hülse 2 nach unten aus dem Sandwichaufbau 17 herausragt.

Wird nun der Mutternkörper 11 im Uhrzeigersinn relativ zu dem Gehäuse 5 gedreht, zieht sich die Zugspindel 9 in das Gehäuse 5 zurück, bis sie die in Fig. 5 gezeigte Position erreicht hat. Hierdurch wird auch die Hülse 2 weiter gegen die Druckhülse 7 des Vorspannelements 1 gepresst. Die beispielsweise aus Aluminium bestehende Hülse 2 ist dabei derart ausgelegt, dass sich bei einer bestimmten axialen Kraft die Hülse 2 radial nach außen stülpt. Durch diese an der Unterseite des Sandwichaufbaus 17 entstehende Ausbeulung, welche in den Fig. 4 und 5 gezeigt ist, wird eine zweite Anlagefläche 18 gebildet, die an der Unterseite des Sandwichaufbaus 17 anliegt. Auf diese Weise wird der Sandwichaufbau 17 zwischen der durch das Gehäuse 5 definierten ersten Anlagefläche 6 und der durch die Hülse 2 gebildeten zweiten Anlagefläche 18 festgespannt. Hierbei wird auch das Tellerfederpaket 8 komprimiert.

Durch das Zusammenpressen des Sandwichaufbaus 17 kann das beispielsweise noch flüssige Dichtmaterial teilweise ausgepresst werden. Hierzu sind, wie in Fig. 1 dargestellt, in der ersten Anlagefläche 6 des Vorspannelements 1 radial verlaufende Nuten 19 ausgebildet, welche als Kanäle zum Ableiten des austretenden Dichtmaterials dienen. Da die obere Stirnfläche der Hülse 2 fest und dichtend gegen die untere Stirnfläche der Druckhülse 7 gepresst wird, dringt das Dichtmaterial nicht in das Innere des Gehäuses 5 ein. Die beweglichen Komponenten kommen daher nicht mit dem Dichtmaterial in Kontakt. Eine eventuelle Dickenabnahme des Sandwichaufbaus 17 während des Zusammenpressens durch austretendes Dichtmaterial oder dergleichen kann durch das Tellerfederpaket 8 ausgeglichen werden, so dass eine weitgehend konstante Klemmkraft auf den Sandwichaufbau 17 ausgeübt wird.

Nach dem Aushärten des Dichtmaterials wird die Zugspindel 9 aus der Hülse 2 herausgeschraubt und das Vorspannelement 1 kann von dem Sandwichaufbau 17 abgenommen werden, während die Hülse 2 in dem Sandwichaufbau 17 verbleibt. Die Löcher in dem Sandwichaufbau 17 werden vor der weiteren Verarbeitung, beispielsweise durch Einsetzen eines Blindniets, nachgebohrt. Hierbei kann die Hülse 2 ausgebohrt werden. Da die beweglichen Teile des Vorspannelements 1 nicht mit dem aushärtenden Dichtmaterial in Kontakt gekommen sind, kann das Vorspannelement 1 nach Aufsetzen einer neuen (Einweg-) Hülse 2 unmittelbar wieder verwendet werden.

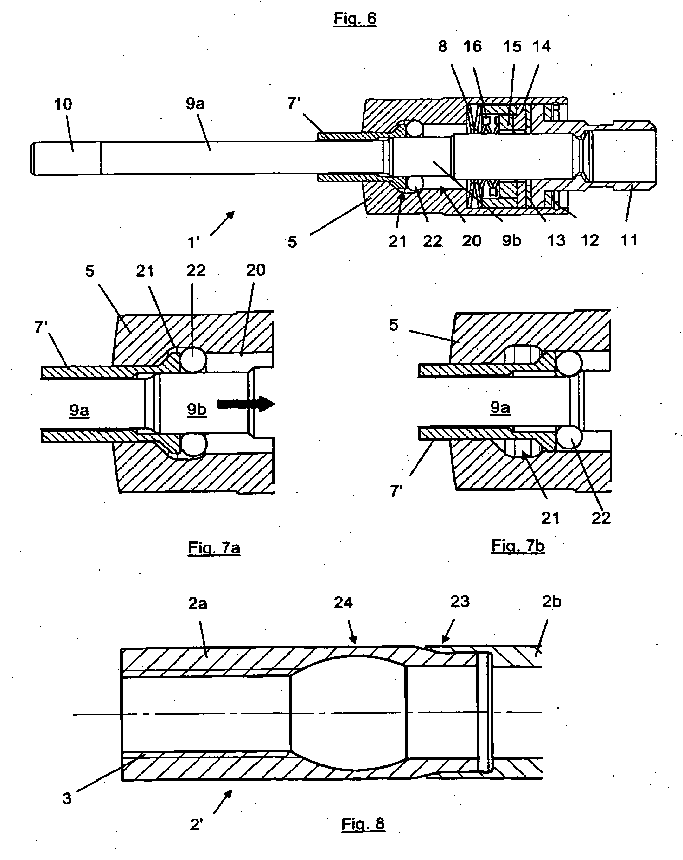

Eine zweite Ausführungsform eines erfindungsgemäßen Vorspannelements ist in den Figuren 6, 7a und 7b dargestellt. Das Vorspannelement 1' hat dabei im Wesentlichen den oben unter Bezugnahme auf die Figuren 1 bis 5 beschriebenen Aufbau. Das Vorspannelement 1' weist jedoch ein gegenüber der Druckhülse 7 der ersten Ausführungsform geändertes Druckstück 7' auf, welches verschiebbar in einem Führungsabschnitt 20 des Gehäuses 5 des Vorspannelements 1' gelagert ist. Wie aus den Figuren 7a und 7b ersichtlich ist, kann das Druckstück 7' auf diese Weise zwischen einer im Wesentlichen aus dem Vorspannelement 1' herausragenden Stellung (Fig. 7a) in eine in das Vorspannelement 1' zurückgezogene Stellung (Fig. 7b) verschoben werden. Die Zugspindel 9 des Vorspannelements 1 weist einen der Hülse 2 zugewandten, vorderen Abschnitt 9a und einen der Hülse 2 abgewandten, hinteren Abschnitt 9b auf, wobei der hintere Abschnitt 9b einen größeren Außendurchmesser als der vordere Abschnitt 9a aufweist. Weiter ist in dem Führungsabschnitt 20 des Gehäuses 5 eine nutartige Ausnehmung 21 vorgesehen, so dass sich der Innendurchmesser des Gehäuses 5 im Bereich der Ausnehmung 21 vergrößert. Die Durchmesserdifferenz zwischen dem Führungsabschnitt 20 und der Ausnehmung 21 entspricht dabei zumindest näherungsweise der Durchmesserdifferenz zwischen den beiden Abschnitten 9a und 9b der Zugspindel 9.

Zwischen der Zugspindel 9 und dem Führungsabschnitt 20 sind in dem Vorspannelement 1' in der dargestellten Ausführungsform mehrere Kugeln 22 aufgenommen, deren Durchmesser etwa dem Abstand zwischen der Zugspindel 9 und dem Führungsabschnitt 20 entspricht. Wie aus Fig. 7a ersichtlich ist, werden die Kugeln 22 in die Aussparung 21, d.h. radial nach außen, gedrängt, solange sich der größere Abschnitt 9b der Zugspindel 9 im Bereich des Führungsabschnittes 20 befindet. Hierdurch wird eine axiale Bewegung des Druckstücks 7' gesperrt. Dagegen fallen die Kugeln 22 radial nach innen, wenn sich der Abschnitt 9a mit kleinerem Durchmesser im Bereich des Führungsabschnittes 20 befindet. Die Kugeln können somit gemeinsam mit dem Druckstück 7' in das Gehäuse 5 des Vorspannelements 1 verschoben werden, wenn die Zugspindel 9 weiter zurückgezogen wird.

Auf diese Weise ist es möglich, zunächst bei der durch die Kugeln 22 gesperrten Position der Druckhülse 7' die wulstartige Verformung an der Hülse auszubilden, ohne das festzuklemmende Bauteil nennenswert einzuspannen. Wird die Zugspindel 9 dagegen weiter in die durch den Pfeil in Fig. 7a angedeutete Richtung, d.h. in das Gehäuse 5 des Vorspannelements 1', hineingezogen, fallen die Kugeln 22 nach innen und können zum Einspannen des Bauteils gemeinsam mit dem Druckstück 7' und der Zugspindel 9 zurückgezogen werden.

Eine weitere Ausführungsform einer Hülse 2' ist in Fig. 8 dargestellt. Die Hülse 2' ist zweiteilig ausgebildet und weist eine Gewindehülse 2a und ein Rohrstück 2b auf, die in einem Verbindungsbereich 23 ineinander gesteckt sind. Das Rohrstück 2b ist mit einem Bereich mit vergleichsweise kleiner Wandstärke über einen Bereich des Gewindestücks 2a geschoben. In dem Verbindungsbereich 23 sind in der dargestellten Ausführungsform sowohl die Gewindehülse 2a als auch das Rohrstück 2b mit einem angefasten Übergangsbereich versehen, so dass sich der dünnwandige Bereich des Rohrstücks 2b radial nach außen aufweitet, wenn die Gewindehülse 2a in das Rohrstück 2b gezogen wird. Hierdurch kann das Rohrstück 2b in einer Bohrung eines Bauteils festgeklemmt werden.

Weiter ist in Fig. 8 ein geschwächter Bereich 24 der Hülse 2' dargestellt, welcher durch eine innere Ausnehmung gebildet ist, so dass sich die Wandstärke der Gewindehülse 2a bereichsweise verjüngt. Dieser geschwächte Bereich 24 dient zu einer definierten Einleitung der Verformung der Hülse 2'.

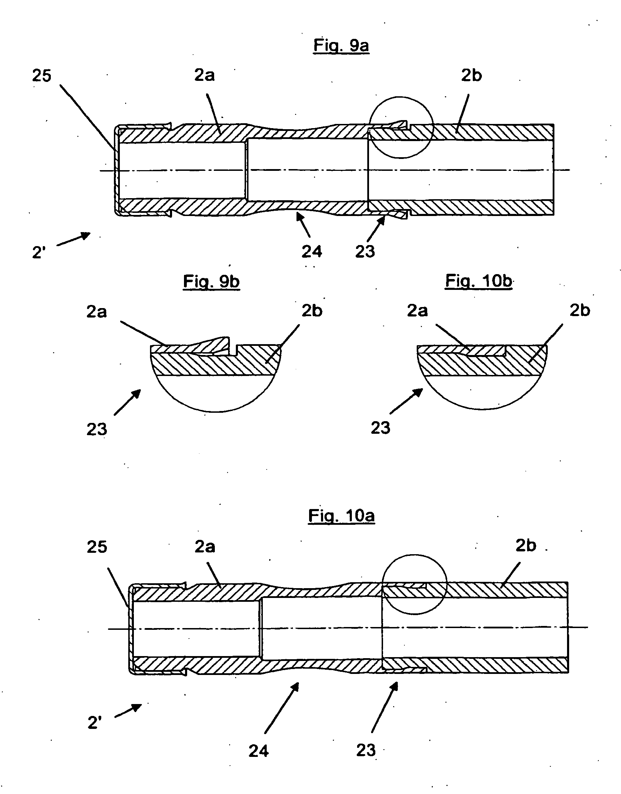

In den Fig. 9a bis 10b ist eine weitere Ausführungsform einer zweiteiligen Hülse 2' dargestellt. Dabei ist das Gewindestück 2a in dem Verbindungsbereich 23 mit einem kegligen Kragen und das Rohrstück 2b mit einer umlaufende Nut ausgestattet, die derart an den kegligen Kragen angepasst ist, dass dieser radial nach innen in die Nut einbördelbar ist. Die Fig. 9a und 9b zeigen das Gewindestück 2a und das Rohrstück 2b dabei vor dem Einbördeln des Kragens, während die Fig. 10 a und 10b das Gewindestück 2a und das Rohrstück 2b miteinander verbunden darstellen. Ähnlich wie oben unter Bezugnahme auf Fig. 8 erläutert ist der Verbindungsbereich 23 so gestaltet, dass sich nun der dünnwandige Bereich des Gewindestücks 2a radial nach außen aufweitet, wenn das Rohrstück 2b in die Gewindehülse 2a gezogen wird, um die Gewindehülse 2a in der Bohrung eines Bauteils festzuklemmen.

Weiter ist das Gewindestück 2a auf der dem Rohrstück 2b abgewandten Seite mit einer Kappe 25 verschlossen. Die Kappe verhindert das Eindringen von Verunreinigungen in das Gewindestück 2a und kann beim Einführen der Hülse 2' in die Bohrung etwaige Verunreinigungen aus der Bohrung herausschieben. Zudem kann die Kappe als ein bspw. farbiger Indikator für die Gesamtlänge der Hülse 2' verwendet werden.

### Bezugszeichenliste

- 1, 1': Vorspannelement
- 2: Hülse
- 3: Innengewindeabschnitt
- 4: Rille
- 5: Gehäuse
- 6: erste Anlagefläche
- 7, 7': Druckhülse / Druckstück
- 8: Tellerfederpaket
- 9: Zugspindel
- 9a, 9b: Abschnitt der Zugspindel
- 10: Außengewindeabschnitt
- 11: Mutternkörper
- 12: Sprengring
- 13: Anlaufscheibe
- 14: Sperrelement
- 15: Ratsche
- 16: Kegelstumpffeder
- 17: Sandwichaufbau
- 18: zweite Anlagefläche
- 19: Nut
- 20: Führungsabschnitt
- 21: Ausnehmung
- 22: Kugel
- 23: Verbindungsbereich
- 24: geschwächter Bereich
- 25: Kappe

## Patentansprüche

1. Befestigungsanordnung, insbesondere zum Festklemmen zu verbindender, insbesondere schichtartiger, Körper (17) gegeneinander, mit einem eine erste Anlagefläche (6) bildenden Vorspannelement (1, 1') und einer eine zweite Anlagefläche (18) bildenden Hülse (2, 2'), welche zum Erzeugen einer Klemmkraft in axialer Richtung relativ zueinander bewegbar sind, und mit einer Einrichtung (8, 9, 11), die Teil des Vorspannelements (1, 1') ist, zum Ausführen einer Relativbewegung der beiden Anlageflächen (6, 18) zueinander, wobei wenigstens die Hülse (2, 2') in ihrer Erstreckung in einer zu der axialen Richtung zumindest im Wesentlichen senkrechten Richtung aus einem komprimierten Zustand in einen expandierten Zustand zur Ausbildung der zweiten Anlagefläche (18) überführbar ist, wobei die Hülse (2, 2') lösbar an dem Vorspannelement (1, 1') befestigbar ist, und durch die Einrichtung (8, 9, 11) zum Ausführen einer Relativbewegung derart gegen das Vorspannelement (1, 1') anziehbar ist, dass die Hülse (2, 2') eine sich radial nach außen erstreckende Ausbeulung bildet, welche die zweite Anlagefläche (18) definiert, wobei die Einrichtung zum Ausführen einer Relativbewegung einen ersten Innengewindeabschnitt sowie eine Zugspindel (9) aufweist wobei die Zugspindel (9) mit einem ersten Außengewindeabschnitt versehen ist, der mit dem Innengewindeabschnitt der Einrichtung (8, 9, 11) entsprechend in Eingriff steht, sowie mit einem zweiten Außengewindeabschnitt (10), der in einen Innengewindeabschnitt (3) der Hülse (2, 2') einschraubbar ist, **dadurch gekennzeichnet, dass** die Hülse (2, 2') eine plastisch verformbare Einweghülse ist.

2. Befestigungsanordnung nach Anspruch 1, **dadurch gekennzeichnet, dass** das Vorspannelement (1, 1') durch ein Gehäuse (5) gebildet ist, in welchem die mit der Hülse (2, 2') verbindbare Einrichtung (8, 9, 11) zum Ausführen einer Relativbewegung in axialer Richtung bewegbar geführt ist.

3. Befestigungsanordnung nach einem der Ansprüche 1 oder 2, **dadurch gekennzeichnet, dass** die Hülse (2, 2') einen definiert geschwächten Bereich (24) zur Einleitung der Ausbeulung aufweist.

4. Befestigungsanordnung nach Anspruch 3, **dadurch gekennzeichnet, dass** der Innendurchmesser der Hülse (2, 2') abschnittsweise zumindest im Wesentlichen dem Außendurchmesser der Zugspindel (9) entspricht.

5. Befestigungsanordnung nach einem der vorhergehenden Ansprüche, **dadurch gekennzeichnet, dass** das Vorspannelement (1, 1') ein Gehäuse (5) aufweist, aus welchem ein Muttemkörper (11), der in dem Gehäuse (5) drehbar gelagert ist, zumindest bereichsweise zum Angriff eines Werkzeugs herausragt, wobei die Zugspindel (9) als Einrichtung zum Ausführen einer Relativbewegung mit dem Mutternkörper (11) in Eingriff steht, und wobei in dem Gehäuse (5) eine nicht mit der Zugspindel (9) in Eingriff stehende Druckhülse (7, 7') vorgesehen ist, die eine beispielsweise ringförmige Abstützfläche bildet, gegen welche die Hülse (2, 2') im Betrieb anliegt.

6. Befestigungsanordnung nach einem der vorhergehenden Ansprüche, **dadurch gekennzeichnet, dass** in dem Vorspannelement (1,1') ein elastisches Element (8) derart angeordnet ist, dass dieses in seinem komprimierten Zustand eine die beiden Anlageflächen (6, 18) aufeinander zu beaufschlagende Klemmkraft ausübt.

7. Befestigungsanordnung nach einem der vorhergehenden Ansprüche, **dadurch gekennzeichnet, dass** in dem Vorspannelement (1', 1') eine Ratsche (15) mit einem dieser zugeordneten Sperrelement (14) vorgesehen ist.

8. Befestigungsanordnung nach einem der vorhergehenden Ansprüche, **dadurch gekennzeichnet, dass** in dem die erste Anlagefläche (6) bildenden Bereich des Vorspannelements (1, 1') wenigstens eine insbesondere radial verlaufende Nut (19) vorgesehen ist.

9. Befestigungsanordnung nach einem der vorhergehenden Ansprüche, **dadurch gekennzeichnet, dass** das Vorspannelement (1') ein mit der Zugspindel (9) zusammenwirkendes Druckstück (7') zur Anlage der Hülse (2) derart aufweist, dass das Druckstück (7') während einer ersten Phase einer Verschiebungsbewegung der Zugspindel (9) zur Verformung der Hülse (2) zumindest im Wesentlichen ortsfest in dem Vorspannelement (1') gehalten ist und sich während einer zweiten Phase der Verschiebungsbewegung der Zugspindel (9) zum Festklemmen der zu verbindenden Körper (17) gemeinsam mit der Zugspindel (9) relativ zu dem Gehäuse (5) des Vorspannelements (1') bewegt.

10. Befestigungsanordnung nach Anspruch 9, **dadurch gekennzeichnet, dass** das Druckstück (7') in einem Führungsabschnitt (20) des Gehäuses (5) verschiebbar gelagert ist, der eine radiale, nutartige Ausnehmung (21) aufweist, dass die Zugspindel (9) wenigstens zwei Abschnitte (9a, 9b) unterschiedlichen Durchmessers aufweist, von denen der der Hülse (2, 2') zugewandte, vordere Abschnitt (9a) einen kleineren Durchmesser als der der Hülse abgewandte, hintere Abschnitt (9b) aufweist, und dass wenigstens eine Kugel (22) derart angrenzend an das Druckstück (7') und zwischen dem Führungsabschnitt (20) und der Zugspindel (9) aufgenommen ist, dass eine axiale Bewegung des Druckstücks (7') gesperrt wird, solange die wenigstens eine Kugel (22) zwischen der Ausnehmung (21) und dem hinteren Abschnitt (9b) der Zugspindel aufgenommen ist, und eine axiale Bewegung des Druckstücks (7') ermöglicht wird, solange die wenigstens eine Kugel (22) außerhalb der Ausnehmung (21) zwischen dem Führungsabschnitt (20) und dem vorderen Abschnitt (9a) der Zugspindel aufgenommen ist.

11. Verwendung einer Hülse in einer Befestigungsanordnung nach einem der vorhergehenden Ansprüche, wobei die Hülse (2, 2') wenigstens bereichsweise aus einem bei einer definierten axialen Belastung durch Ausbeulung verformbaren Material besteht, mit einer Innenfläche, die bereichsweise mit einem Innengewindeabschnitt (3) versehen ist, und mit einer auf der dem Innengewindeabschnitt (3) abgewandten Seite ausgebildeten Stirnfläche als Anschlagfläche, **dadurch gekennzeichnet, dass** die Hülse eine aus plastisch verformbarem Material, vorzugsweise Aluminium, bestehende Einweghülse ist wobei ein definiert geschwächter Bereich (24) zur Einleitung der Ausbeulung derart vorgesehen ist, dass die Einweghülse (2, 2') auch nach Ausbildung der Ausbeulung einstückig ausgebildet ist.

12. Verwendung nach Anspruch 11, **dadurch gekennzeichnet, dass** die Außenfläche der Hülse (2, 2') wenigstens abschnittsweise mit in axialer Richtung verlaufenden Rillen (4) oder Vorsprüngen versehen ist.

13. Verwendung nach Anspruch 11 oder 12, **dadurch gekennzeichnet, dass** der definiert geschwächte Bereich (24) zur Einleitung der Ausbeulung angrenzend an den Innengewindeabschnitt (3) vorgesehen ist.

14. Verwendung nach Anspruch 13, **dadurch gekennzeichnet, dass** der geschwächte Bereich (24) durch eine Verjüngung der Wandstärke der Hülse (2, 2') und/oder durch eine die Verformbarkeit verbessernde Wärmebehandlung gebildet ist.

15. Verwendung nach einem der Ansprüche 11 bis 14, **dadurch gekennzeichnet, dass** das Gewindestück (2a) auf der dem Rohrstück (2b) abgewandten Seite mit einer Kappe (25) verschlossen ist.

16. Verfahren zum Fixieren und/oder Festklemmen wenigstens eines insbesondere mehrschichtigen Bauteils (17) mittels einer Befestigungsanordnung nach einem der Ansprüche 1 bis 10 durch folgenden Schritten **gekennzeichnet** :
- Einführen einer plastisch verformbaren Einweghülse (2, 2') und einer mit dieser lösbar verbundenen Zugspindel (9) eines Vorspannelements (1, 1') durch eine Öffnung des wenigstens einen Bauteils (17) bis zumindest ein Bereich der Hülse (2, 2') auf der dem Vorspannelement (1, 1') abgewandten Seite aus dem wenigstens einen Bauteil (17) tritt,
- Ausführen einer axialen Bewegung der Zugspindel (9) relativ zu dem Vorspannelement (1, 1') in eine die Hülse (2, 2') zu dem Vorspannelement ziehenden Richtung unter Ausbildung einer wulstartigen Verformung (18) eines Abschnitts der Hülse, wobei die Verformung (18) das wenigstens eine Bauteil (17) auf seiner dem Vorspannelement abgewandten Seite hintergreift.

17. Verfahren nach Anspruch 16, **dadurch gekennzeichnet, dass** zunächst die wulstartige Verformung (18) an der Hülse (2, 2') ausgebildet wird, ohne das festzuklemmende Bauteil (17) nennenswert einzuspannen.

18. Verfahren nach Anspruch 16, **dadurch gekennzeichnet, dass** die axiale Bewegung der Zugspindel (9) relativ zu dem Vorspannelement (1, 1') nach der Ausbildung der Verformung (18) der Hülse (2, 2') fortgesetzt wird, so dass das wenigstens eine Bauteil (17) zwischen einer Anlagefläche (6) des Vorspannelements (1, 1') und der eine zweite Anlagefläche bildenden Verformung (18) eingespannt wird.

19. Verfahren nach einem der Ansprüche 16 oder 17, **dadurch gekennzeichnet, dass** die Hülse (2') mehrteilig mit einem Rohrstück (2b) und einem Gewindestück (2a), die einander in einem Verbindungsbereich (23) überlappend ineinander gesteckt sind, ausgebildet ist, wobei das Gewindestück (2a) in dem Verbindungsbereich (23) einen kegligen Kragen und das Rohrstück (2b) eine umlaufende Nut aufweist, die derart an den kegligen Kragen angepasst ist, dass dieser vor oder während des Einführens der verformbaren Hülse (2, 2') durch die Öffnung des wenigstens einen Bauteils (17) radial nach innen in die Nut eingebördelt wird.

## Claims

1. A fastening arrangement, especially for clamping bodies (17) to be connected, particularly layered bodies, with a pretensioning element (1, 1') that forms a first contact surface (6) and a sleeve (2, 2') that forms a second contact surface (18), wherein the pretensioning element and the sleeve can be moved relative to one another in the axial direction in order to generate a clamping force, and with a device (8, 9, 11) that forms part of the pretensioning element (1, 1') and serves for carrying out a relative movement between the two contact surfaces (6, 18), wherein at least the sleeve (2, 2') can be transferred from a compressed state into an expanded state in its extension in a direction that extends at least essentially perpendicular to the axial direction in order to form the second contact surface (18), wherein the sleeve (2, 2') can be detachably fastened to the pretensioning element (1, 1') and tightened relative to the pretensioning element (1, 1') by the device (8, 9, 11) for carrying out a relative movement in such a way that the sleeve (2, 2') forms a bulge that extends radially outward and defines the second contact surface (18), wherein the device for carrying out a relative movement features a first internally threaded section, as well as a drawing spindle (9), and wherein the drawing spindle (9) is provided with a first externally threaded section that is correspondingly engaged with the internally threaded section' of the device (8, 9, 11), as well as with a second externally threaded section (10) that can be screwed into an internally threaded section (3) of the sleeve (2, 2'), **characterized in that** the sleeve (2, 2') is a disposable sleeve that can be plastically deformed.

2. The fastening arrangement according to Claim 1, **characterized in that** the pretensioning element (1, 1') is formed by a housing (5), in which the device (8, 9, 11) for carrying out a relative movement that can be connected to the sleeve (2, 2') is guided in an axially movable fashion.

3. The fastening arrangement according to Claim 1 or 2, **characterized in that** the sleeve (2, 2') features a region (24) that is weakened in a defined fashion in order to initiate the bulging.

4. The fastening arrangement according to Claim 3, **characterized in that** the inside diameter of the sleeve (2, 2') in sections at least essentially corresponds to the outside diameter of the drawing spindle (9),

5. The fastening arrangement according to one of the preceding claims, **characterized in that** the pretensioning element (1, 1') features a housing (5), from which a nut body (11) that is rotatably supported in the housing (5) protrudes at least in certain areas in order to attach a tool, wherein the drawing spindle (9) as the device for carrying out a relative movement is engaged with the nut body (11), and wherein a pressure sleeve (7, 7') that is not engaged with the drawing spindle (9) is provided in the housing (5) and forms, for example, an angular support surface, against which the sleeve (2, 2') rests during operation,

6. The fastening arrangement according to one of the preceding claims, **characterized in that** an elastic element (8) is arranged in the pretensioning element (1, 1') in such a way that it exerts a clamping force acting upon both contact surfaces (6, 18) toward one another in its compressed state.

7. The fastening arrangement according to one of the preceding claims, **characterized in that** a ratchet (15) with a locking element (14) assigned thereto is provided in the pretensioning element (1, 1').

8. The fastening arrangement according to one of the preceding claims, **characterized in that** at least one groove (19) extending, in particular, in the radial direction is provided in the region of the pretensioning element (1, 1') that forms the first contact surface (6).

9. The fastening arrangement according to one of the preceding claims, **characterized in that** the pretensioning element (1') is provided with a thrust member (7') that cooperates with the drawing spindle (9) and serves for being contacted by the sleeve (2), and **in that** the thrust member (7') is held in an at least essentially stationary fashion in the pretensioning element (1') during a first phase of the displacement of the drawing spindle (9) in order to deform the sleeve (2) and moves relative to the housing (5) of the pretensioning element (1') together with the drawing spindle (9) during a second phase of the displacement of the drawing spindle (9) in order to clamp the bodies (17) to be connected.

10. The fastening arrangement according to Claim 9, **characterized in that** the thrust member (7') is displaceably supported in a guide section (20) of the housing (5) that features a radial, groove-like recess (21), **in that** the drawing spindle (9) features at least two sections (9a, 9b) of different diameter, wherein the front section (9a) that faces the sleeve (2, 2') has a smaller diameter than the rear section (9b) that faces away from the sleeve, and **in that** at least one ball (22) is accommodated adjacent to the thrust member (7') and between the guide section (20) and the drawing spindle (9) in such a way that an axial movement of the thrust member (7') is blocked as long as the at least one ball (22) is accommodated between the recess (21) and the rear section (9b) of the drawing spindle and an axial movement of the thrust member (7') is made possible as long as the at least one ball (22) is accommodated outside the recess (21) between the guide section (20) and the front section (9a) of the drawing spindle.

11. The utilization of a sleeve in a fastening arrangement according to one of the preceding claims, wherein the sleeve (2, 2') consists at least in certain areas of a material that can be deformed in the form of bulging under a defined axial load, with an inner surface that in certain areas is provided with an internally threaded section (3), and with a face that is realized on the side facing away from the internally threaded section (3) and serves as a stopping face, **characterized in that** the sleeve is a disposable sleeve consisting of a material that can be plastically deformed, preferably aluminum, wherein a region (24) that is weakened in a defined fashion is provided in order to initiate the bulging in such a way that the disposable sleeve (2, 2') is also realized in one piece after producing the bulge.

12. The utilization according to Claim 11, **characterized in that** the outer surface of the sleeve (2, 2') is at least in sections provided with grooves (4) or projections that extend in the axial direction.

13. The utilization according to Claim 11 or 12, **characterized in that** the region (24) that is weakened in a defined fashion in order to initiate the bulging is provided adjacent to the internally threaded section (3).

14. The utilization according to Claim 13, **characterized in that** the weakened region (24) is realized in the form of a reduction of the wall thickness of the sleeve (2, 2') and/or a heat treatment that improves the deformability.

15. The utilization according to one of Claims 11 to 14, **characterized in that** the threaded section (2a) is closed with a cap (25) on the side that faces away from the tubular section (2b).

16. A method for fixing and/or clamping at least one component (17), particularly a multilayer component, by means of a fastening arrangement according to one of Claims 1 to 10, **characterized by** the following steps:
- inserting a disposable sleeve (2, 2') that can be plastically deformed and a drawing spindle (9) of a pretensioning element (1, 1') that is detachably connected thereto through an opening of the at least one component (17) until at least a region of the sleeve (2, 2') emerges from the at least one component (17) on the side facing away from the pretensioning element (1, 1'),
- axially moving the drawing spindle (9) relative to the pretensioning element (1, 1') in a direction that pulls the sleeve (2, 2') toward the pretensioning element such that a bead-like deformation (18) of a section of the sleeve is produced, wherein the deformation (18) engages behind the at least one component (17) on its side that faces away from the pretensioning element.

17. The method according to Claim 16, **characterized in that** the bead-like deformation (18) is initially produced on the sleeve (2, 2') without considerable clamping the component (17) to be clamped.

18. The method according to Claim 16, **characterized in that** the axial movement of the drawing spindle (9) relative to the pretensioning element (1, 1') is continued after the deformation (18) of the sleeve (2, 2') is produced such that the at least one component (17) is clamped between a contact surface (6) of the pretensioning element (1, 1') and the deformation (18) that forms a second contact surface.

19. The method according to Claim 16 or 17, **characterized in that** the sleeve (2') consists of several parts and features a tubular section (2b) and a threaded section (2a) that are inserted into one another in an overlapping fashion in a connecting region (23), wherein the threaded section (2a) features in the connecting region (23) a conical collar and the tubular section (2b) features a peripheral groove that is adapted to the conical collar in such a way that this collar is flagged radially inward into the groove prior to or during the insertion of the deformable sleeve (2, 2') into the opening of the at least one component (17).

## Revendications

1. Agrafe d'épinglage, en particulier pour serrer l'un contre l'autre des corps (17) à relier, en particulier en forme de couches, comprenant un élément de pré-tension (1, 1') formant une première face d'appui (6) et une douille (2, 2') formant une deuxième face d'appui (18), lesquelles sont mobiles l'une par rapport à l'autre dans le sens axial pour produire une force de serrage, et comprenant un dispositif (8, 9, 11) qui fait partie de l'élément de pré-tension (1, 1') pour effectuer un mouvement relatif des deux surfaces d'appui (6, 18) l'une par rapport à l'autre, sachant qu'au moins la douille (2, 2') peut être amenée dans son étirement dans un sens au moins essentiellement vertical par rapport au sens axial d'un état comprimé à un état déployé pour former la deuxième face d'appui (18), sachant que la douille (2, 2') est fixée sur l'élément de pré-tension (1, 1') de manière à pouvoir en être séparée, et peut être tirée contre l'élément de pré-tension (1, 1') par le dispositif (8, 9, 11) pour effectuer un mouvement relatif de telle manière que la douille (2, 2') forme une bosse s'étendant radialement vers l'extérieur qui définit la deuxième surface d'appui (18), sachant que le dispositif pour effectuer un mouvement relatif présente une première section filetée femelle et une tige de traction (9), sachant que la tige de traction (9) est munie d'une première section filetée mâle qui se met en prise de manière correspondante avec la section filetée femelle du dispositif (8, 9, 11), ainsi qu'avec une deuxième section filetée mâle (10) qui peut être vissée dans une section filetée femelle (3) de la douille (2, 2'), **caractérisée en ce que** la douille (2, 2') est une douille jetable plastiquement déformable.

2. Agrafe d'épinglage selon la revendication 1, **caractérisée en ce que** l'élément de pré-tension (1, 1') est formé par un boîtier (5) dans lequel le dispositif (8, 9, 11) pouvant être relié à la douille (2, 2') est dirigé de manière mobile dans le sens axial pour effectuer un mouvement relatif.

3. Agrafe d'épinglage selon la revendication 1 ou 2, **caractérisée en ce que** la douille (2, 2') présente une zone définie diminuée (24) pour introduire la bosse.

4. Agrafe d'épinglage selon la revendication 3, **caractérisée en ce que** le diamètre intérieur de la douille (2, 2') correspond par tronçons au moins essentiellement au diamètre extérieur de la tige de traction (9).

5. Agrafe d'épinglage selon l'une des revendications précédentes, **caractérisée en ce que** l'élément de pré-tension (1, 1') présente un boîtier (5) duquel un corps d'écrou (11) positionné de manière rotative dans le boîtier (5) fait saillie au moins par endroits pour la prise d'un outil, sachant que la tige de traction (9) est en prise avec le corps d'écrou (11) en tant que dispositif pour effectuer un mouvement relatif, et sachant que dans le boîtier (5), une douille de compression (7, 7') non en prise avec la tige de traction (9) est prévue qui forme une surface d'appui par exemple annulaire, contre laquelle la douille (2, 2') repose en fonctionnement,

6. Agrafe d'épinglage selon l'une des revendications précédentes, **caractérisée en ce que** dans l'élément de pré-tension (1, 1'), un élément élastique (8) est ainsi aménagé que celui-ci dans son état comprimé, exerce une force de serrage sollicitant les deux surfaces d'appui (6, 18) l'une sur l'autre.

7. Agrafe d'épinglage selon l'une des revendications précédentes, **caractérisée en ce que** dans l'élément de pré-tension (1, 1'), un rochet (15) est prévu avec un élément de blocage (14) correspondant à celui-ci.

8. Agrafe d'épinglage selon l'une des revendications précédentes, **caractérisée en ce que** dans la partie de l'élément de pré-tension (1, 1') formant la première surface d'appui (6), au moins une rainure (19) au tracé particulièrement radial est prévue.

9. Agrafe d'épinglage selon l'une des revendications précédentes, **caractérisée en ce que** l'élément de pré-tension (1') présente une pièce de compression (7') coopérant avec la tige de traction (9) pour l'appui de la douille (2) de telle manière que la pièce de compression (7') est maintenue au moins essentiellement de manière fixe dans l'élément de pré-tension (1') pendant une première phase d'un mouvement de poussée de la tige de traction (9) pour déformer la douille (2) et se déplace ensemble avec la tige de traction (9) par rapport au boîtier (5) de l'élément de pré-tension (1') pendant une deuxième phase du mouvement de la tige de traction (9) pour serrer le corps à relier (17).

10. Agrafe d'épinglage selon la revendication 9, **caractérisée en ce que** la pièce de compression (7') est positionnée de manière mobile dans une section de guidage (20) du boîtier (5), laquelle présente un évidement radial en forme de rainure (21), que la tige de traction (9) présente au moins deux sections (9a, 9b) de diamètre différent, desquelles la section avant (9a) tournée vers la douille (2, 2') présente un diamètre plus petit que la section arrière (9b) détournée de la douille, et qu'au moins une bille (22) est ainsi reçue en se délimitant sur la pièce de compression (7') et entre la section de guidage (20) et la tige de traction (9), qu'un mouvement axial de la pièce de compression (7') est bloqué tant que l'au moins une bille (22) est reçue entre l'évidement (21) et la section arrière (9b) de la tige de traction, et un mouvement axial de la pièce de compression (7') est rendu possible tant que l'au moins une bille (22) est reçue en-dehors de l'évidement (21) entre la section de guidage (20) et la section avant (9a) de la tige de traction.

11. Utilisation d'une douille dans une agrafe d'épinglage selon l'une des revendications précédentes, dans laquelle la douille (2, 2') est composée au moins par endroits d'un matériau déformable par bossage lors d'une contrainte axiale définie, avec une surface intérieure qui est munie par endroits d'une section de filetage femelle (3) et une face avant en tant que face de butée formée sur le côté détourné de la section de filetage femelle (3), **caractérisée en ce que** la douille est une douille jetable en matériau plastiquement déformable, de préférence en aluminium, sachant qu'une zone définie diminuée (24) pour introduire la bosse est ainsi prévue que la douille jetable (2, 2') est monobloc même après la formation de la bosse.

12. Utilisation d'une douille selon la revendication 11, **caractérisée en ce que** la face extérieure de la douille (2, 2') est munie au moins par tronçons de cannelures (4) ou de saillies s'étendant dans le sens axial.

13. Utilisation d'une douille selon la revendication 11 ou 12, **caractérisée en ce que** la zone définie diminuée (24) est prévue pour introduire la bosse en se délimitant sur la section de filetage femelle (3).

14. Utilisation d'une douille selon la revendication 13, **caractérisée en ce que** la zone définie diminuée (24) est formée par un rétrécissement de l'épaisseur de paroi de la douille (2, 2') et/ou par un traitement thermique améliorant la déformation.

15. Utilisation d'une douille selon l'une des revendications 11 à 14, **caractérisée en ce que** la pièce filetée (2a) sur le côté détourné du tubage (2b) est fermée par un bouchon (25).

16. Procédé d'épinglage et/ou de serrage d'au moins une pièce (17) particulièrement à plusieurs couches au moyen d'une agrafe d'épinglage selon l'une des revendications 1 à 10, **caractérisé par** les étapes suivantes :
- introduction d'une douille jetable (2, 2') plastiquement déformable et d'une tige de traction (9) d'un élément de pré-tension (1, 1') reliée à celle-ci en pouvant en être séparée à travers une ouverture de l'au moins une pièce (17) jusqu'au moins une zone de la douille (2, 2') sur le côté détourné de l'élément de pré-tension (1, 1'), de laquelle au moins une pièce (17) sort,
- exécution d'un mouvement axial de la tige de traction (9) par rapport à l'élément de pré-tension (1, 1') dans un sens tirant la douille (2, 2') vers l'élément de pré-tension par la formation d'une déformation (18) en forme de boudin d'une section de la douille, sachant que la déformation (18) met en prise arrière l'au moins une pièce (17) sur son côté détourné de l'élément de pré-tension.

17. Procédé selon la revendication 16, **caractérisé en ce que** tout d'abord la déformation (18) en forme de boudin est formée sur la douille (2, 2'), sans serrer de manière considérable la pièce (17) à serrer.

18. Procédé selon la revendication 16, **caractérisé en ce que** le mouvement axial de la tige de traction (9) par rapport à l'élément de pré-tension (1, 1') continue après la réalisation de la déformation (18) de la douille (2, 2'), de façon à ce que l'au moins une pièce (17) soit coincée entre une surface d'appui (6) de l'élément de pré-tension (1, 1') et la déformation (18) formant une deuxième face d'appui.

19. Procédé selon la revendication 16 ou 17, **caractérisé en ce que** la douille (2') est formée en plusieurs parties d'un tubage (2b) et d'une pièce filetée (2a) qui sont insérées l'une dans l'autre en se chevauchant dans une zone de liaison (23), sachant que la pièce filetée (2a) présente dans la zone de liaison (23) un collet conique et le tubage (2b) présente une rainure périphérique qui est adaptée au collet conique de manière à ce que celui soit bordé radialement vers l'intérieur dans la rainure avant ou pendant l'introduction de la douille (2, 2') déformable dans l'ouverture de l'au moins une pièce (17).
